(19) Europäisches Patentamt / European Patent Office / Office européen des brevets

(11) EP 3 972 235 B1

(12) **EUROPEAN PATENT SPECIFICATION**

(45) Date of publication and mention
of the grant of the patent:
**26.11.2025 Bulletin 2025/48**

(21) Application number: **20814252.1**

(22) Date of filing: **29.05.2020**

(51) International Patent Classification (IPC):
*H04N 23/90* (2023.01)    *H04N 23/67* (2023.01)
*H04N 5/77* (2006.01)    *H04N 5/222* (2006.01)
*B64D 47/08* (2006.01)    *B64C 39/00* (2023.01)
*H04N 23/45* (2023.01)    *B64U 10/14* (2023.01)
*B64U 20/87* (2023.01)    *H04N 23/68* (2023.01)
*B64U 101/30* (2023.01)

(52) Cooperative Patent Classification (CPC):
**H04N 5/2226; B64U 10/14; B64U 20/87;
H04N 5/77; H04N 23/45; H04N 23/67;
H04N 23/671; H04N 23/90; B64U 2101/30;
H04N 23/6812**

(86) International application number:
**PCT/CN2020/093434**

(87) International publication number:
**WO 2020/239094 (03.12.2020 Gazette 2020/49)**

(54) **FOCUSING METHOD AND APPARATUS, AERIAL PHOTOGRAPHY CAMERA, AND UNMANNED AERIAL VEHICLE**

FOKUSSIERVERFAHREN UND -VORRICHTUNG, LUFTBILDKAMERA UND UNBEMANNTES LUFTFAHRZEUG

PROCÉDÉ ET APPAREIL DE FOCALISATION, CAMÉRA DE PHOTOGRAPHIE AÉRIENNE, ET VÉHICULE AÉRIEN SANS PILOTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2019 CN 201910463170**

(43) Date of publication of application:
**23.03.2022 Bulletin 2022/12**

(73) Proprietor: **Autel Robotics Co., Ltd.**
**Shenzhen, Guangdong 518055 (CN)**

(72) Inventor: **JIANG, Defei**
**Shenzhen, Guangdong 518055 (CN)**

(74) Representative: **Gulde & Partner**
**Patent- und Rechtsanwaltskanzlei mbB**
**Berliner Freiheit 2**
**10785 Berlin (DE)**

(56) References cited:
**CN-A- 105 554 385       CN-A- 105 744 163
CN-A- 107 000 840       CN-A- 107 920 209
CN-A- 108 833 795       CN-A- 108 924 419
CN-A- 110 225 249       CN-B- 104 796 672
CN-U- 208 836 252       US-A1- 2013 002 577
US-A1- 2017 374 354     US-A1- 2018 352 167
US-A1- 2019 082 113**

## Description

## TECHNICAL FIELD

The present application relates to the technical field of aircrafts, and in particular, to a focusing method and an apparatus, an aerial camera and an unmanned aerial vehicle (UAV).

## BACKGROUND

A conventional aircraft, such as a UAV (also referred to as a drone), is increasingly widely used. The UAV has advantages such as a small size, a small weight, flexibility, quick reaction, unmanned driving and low operation requirements. The UAV carries an aerial camera by using a gimbal to implement real-time image transmission and detection in high-risk areas. The UAV makes great supplement for satellite remote sensing and traditional aerial remote sensing. In recent years, the UAV has wide application prospects in disaster investigation and rescue, aerial monitoring, transmission line inspection, aerial photography, aerial survey and military fields.

When the UAV is close to a target object, the aerial camera requires focusing to obtain a clear image. During the implementation of the objective of the disclosure, the following problems are found. Most conventional automatic focusing technologies are implemented based on an image processing manner of the aerial camera. However, during flight of the UAV, a relative distance between the aerial camera and the target object varies greatly with the movement. Therefore, a focusing speed is relatively slow, and inaccurate focusing is easily caused. The relevant prior arts describe as follows:

The patent reference CN208836252U discloses a camera and an unmanned aerial vehicle. The camera comprises a camera main body, a distance measuring assembly, a lens assembly assembled on the camera main body and a control module, wherein the distance measuring assembly is assembled on the lens assembly. Wherein the distance measuring assembly is used for measuring distance information between a shot object and the lens assembly, and the control module is used for receiving the distance information transmitted by the distance measuring assembly and adjusting the focal length of the lens assembly according to the distance information. The distance measuring assembly can actively measure the distance between the shot object and the lens assembly and obtain corresponding distance information, the control module controls the lens assembly to focus according to the distance information, the automatic focusing effect is good, and the shooting effect is good.

The patent reference US2019/082113AI discloses a method for moving an optical device of an imaging device includes one or more depth sensors acquiring one or more depth measurements within a predefined spatial coordinate system. Each of the one or more depth measurements indicates a distance from the imaging device to an object within the predefined spatial coordinate system. The method further includes one or more orientation sensors determining orientation information of the imaging device within the predefined spatial coordinate system, estimating an object distance between the imaging device and the object based on the one or more depth measurements and the orientation information, and moving the optical device from a first position to a second position according to the object distance and a focal length of the optical device.

The patent reference US2017/374354AI discloses a method for focal length adjustment includes capturing scene images of a scene using a first imaging device and a second imaging device of an imaging mechanism, determining a distance between an object of interest in the scene and the imaging mechanism based on the scene images of the scene, and automatically adjusting a focal length of the imaging mechanism according to the distance.

The patent reference US2018/352167AI discloses an image pickup apparatus, an image pickup control method, and a program that enable focus control to be performed without depending on environmental conditions and optical conditions, for example. An image pickup apparatus includes : an image pickup device having a predetermined image pickup area; a lens drive unit that drives a focus lens; a storage unit that stores, in a lookup table, a correspondence relationship between distance information with respect to a subject and lens position information of the focus lens; a distance information acquisition unit that acquires distance information with respect to an object existing in the image pickup area; and a control unit that controls the lens drive unit on the basis of the distance information acquired by the distance information acquisition unit and the lookup table.

The patent reference CN108924419A discloses an unmanned aerial vehicle camera shooting zoom control system for transmission line inspection. The unmanned aerial vehicle camera shooting zoom control system for the transmission line inspection comprises a control device arranged at a ground end, and a control module, a steering gear and a camera shooting component with a zoom ring arranged on the unmanned aerial vehicle; wherein the control module is connected with the steering gear for controlling, an output shaft of the steering gear is fixedly sleeved with a gear, and the gear meshes with the zoom ring of the camera shooting component; and the control device wirelessly connects the control module and can control the rotation of the steering gear to drive the gear transmission to adjust the zoom ring; so that the zoom of the camera shooting component is realized.

The patent reference CN104796672B discloses an emergency monitoring cloud platform device for an unmanned aerial vehicle and an operating method of the emergency monitoring cloud platform device for the unmanned aerial vehicle. The emergency monitoring cloud platform device for the unmanned aerial vehicle and the operating method of the emergency monitoring cloud platform device for the unmanned aerial vehicle keep monitoring surrounding environments through the panoramic wide-angle camera, the system controls the cloud platform to automatically align a concrete target which is found and designated on a monitoring video by an operator to rapidly and effectively achieve video control and target acquisition based on the target.

## SUMMARY

A main technical problem to be resolved by embodiments of the disclosure is to provide a focusing method and apparatus, an aerial camera and a UAV. By means of the embodiments of the disclosure, the focusing speed and the focusing accuracy of an aerial camera can be improved.

In order to achieve the objective, the embodiments of the disclosure adopt the following technical solutions. In a first aspect, a focusing method is provided. The method is applicable to an aerial camera. The aerial camera is mounted to a UAV by using a gimbal. The UAV comprises a plurality of depth cameras. The method is defined in appended claim 1 and includes:

acquiring attitude information of the aerial camera, the attitude information comprising a photographing direction of the aerial camera and an angle of tilt of the gimbal;
selecting, from the plurality of depth cameras according to the attitude information, a depth camera having a same photographing direction as the aerial camera as a target depth camera;
acquiring an actual distance between a to-be-photographed object and the target depth camera by using the target depth camera;
calculating a target distance between the aerial camera and the to-be-photographed object according to the actual distance and the attitude information of the aerial camera; and
controlling, according to the target distance, the aerial camera to perform focusing.

In an embodiment, the aerial camera includes a camera housing and a video camera connected to the camera housing. The depth camera is mounted to the camera housing.

The determining a target distance between the aerial camera and the to-be-photographed object according to the actual distance includes:
determining that the actual distance is the target distance between the aerial camera and the to-be-photographed object.

The UAV includes a plurality of depth cameras disposed on a fuselage of the UAV and configured to acquire an actual distance between the to-be-photographed object and the UAV in a plurality of directions.

Optionally, a gyroscope is disposed in the aerial camera. The acquiring attitude information of the aerial camera includes:
acquiring the attitude information of the aerial camera by using the gyroscope.

Optionally, the plurality of depth cameras include a forward-looking depth camera disposed on a front portion of the fuselage of the UAV, a rearward-looking depth camera disposed on a rear portion of the fuselage, a leftward-looking depth camera disposed on a left portion of the fuselage, a rightward-looking depth camera disposed on a right portion of the fuselage and a downward-looking depth camera disposed on a lower portion of the fuselage.

The selecting, from the plurality of depth cameras according to the attitude information, a depth camera having a same photographing direction as the aerial camera as a target depth camera specifically includes:

when the angle of tilt of the gimbal is in a range of 0° to 45°, and when the acquired photographing direction of the aerial camera is a forward direction, selecting the forward-looking depth camera as the target depth camera; or
when the acquired photographing direction of the aerial camera is a rearward direction, selecting the rearward-looking depth camera as the target depth camera; or
when the acquired photographing direction of the aerial camera is a leftward direction, selecting the leftward-looking depth camera as the target depth camera; or
when the acquired photographing direction of the aerial camera is a rightward direction, selecting the rightward-looking depth camera as the target depth camera; or
when the angle of tilt of the gimbal is in a range of 45° to 90°, selecting the downward-looking depth camera as the target depth camera.

The calculating the target distance between the aerial camera and the to-be-photographed object according to the actual distance and the attitude information includes:
when the angle of tilt of the gimbal is in a range of 0° to 45°, calculating the target distance according to the following formula:

$$L = L1 \cdot Cos\alpha + L2;$$

or
when the angle of tilt of the gimbal is in a range of 45° to 90°, calculating the target distance according to the following formula:

$$L = L1 \cdot Cos(90° - \alpha) + L2.$$

L1 is the actual distance between the to-be-photographed object and the target depth camera that is acquired by using the target depth camera. α is the angle of tilt of the gimbal. L2 is a distance between the aerial camera and the target depth camera in the photographing direction of the aerial camera.

In some embodiments, the controlling, according to the target distance, the aerial camera to perform focusing includes:

acquiring a correspondence between an object distance and a focal distance of the aerial camera; determining whether the target distance is less than or equal to a preset distance threshold; and if so, controlling, according to the target distance and the correspondence between the object distance and the focal distance of the aerial camera, the aerial camera to perform focusing.

In a second non-claimed aspect, an embodiment of the disclosure provides a focusing apparatus. The apparatus is applicable to an aerial camera. The aerial camera is carried on a UAV by using a gimbal. The apparatus includes:

an actual distance acquisition module, configured to acquire an actual distance between a to-be-photographed object and a depth camera by using the depth camera; a target distance determination module, configured to determine a target distance between the aerial camera and the to-be-photographed object according to the actual distance; and a focusing module, configured to control, according to the target distance, the aerial camera to perform focusing.

In an embodiment, the aerial camera includes a camera housing and a video camera connected to the camera housing. The depth camera is mounted to the camera housing.

The target distance determination module is configured to determine that the actual distance is the target distance between the aerial camera and the to-be-photographed object.

In an embodiment, the UAV includes a plurality of depth cameras disposed on a fuselage of the UAV and configured to acquire an actual distance between the to-be-photographed object and the UAV in a plurality of directions. The apparatus further includes:

an attitude information acquisition module, configured to acquire attitude information of the aerial camera, where the attitude information includes a photographing direction of the aerial camera and an angle of tilt of the gimbal; and a depth camera selection module, configured to select, from the plurality of depth cameras according to the attitude information, a depth camera having a same photographing direction as the aerial camera as a target depth camera.

The actual distance acquisition module is configured to acquire an actual distance between the to-be-photographed object and the target depth camera by using the target depth camera.

The target distance determination module is configured to calculate the target distance between the aerial camera and the to-be-photographed object according to the actual distance and the attitude information.

Optionally, a gyroscope is disposed in the aerial camera. The apparatus further includes: acquiring the attitude information of the aerial camera by using the gyroscope.

Optionally, the plurality of depth cameras include a forward-looking depth camera disposed on a front portion of the fuselage of the UAV, a rearward-looking depth camera disposed on a rear portion of the fuselage, a leftward-looking depth camera disposed on a left portion of the fuselage, a rightward-looking depth camera disposed on a right portion of the fuselage and a downward-looking depth camera disposed on a lower portion of the fuselage.

The depth camera selection module is further configured to:

when the angle of tilt of the gimbal is in a range of 0° to 45°, and when the acquired photographing direction of the aerial camera is a forward direction, select the forward-looking depth camera as the target depth camera; or when the acquired photographing direction of the aerial camera is a rearward direction, select the rearward-looking depth camera as the target depth camera; or when the acquired photographing direction of the aerial camera is a leftward direction, select the leftward-looking depth camera as the target depth camera; or when the acquired photographing direction of the aerial camera is a rightward direction, select the rightward-looking depth camera as the target depth camera; or when the angle of tilt of the gimbal is in a range of 45° to 90°, and when the acquired photographing direction of the aerial camera is a downward direction, select the downward-looking depth camera as the target depth camera.

Optionally, the target distance determination module is configured to: when the angle of tilt of the gimbal is in a range of 0° to 45°, calculate the target distance according to the following

formula:

$$L = L1 \cdot Cos\alpha + L2;$$

or

when the angle of tilt of the gimbal is in a range of 45° to 90°, calculate the target distance according to the following formula:

$$L = L1 \cdot Cos(90°-\alpha) + L2.$$

L1 is the actual distance between the to-be-photographed object and the target depth camera that is acquired by using the target depth camera. $\alpha$ is the angle of tilt of the gimbal. L2 is a distance between the aerial camera and the target depth camera in the photographing direction of the aerial camera.

In some embodiments, the focusing module is configured to:

> acquire a correspondence between an object distance and a focal distance of the aerial camera;
> determine whether the target distance is less than or equal to a preset distance threshold; and
> if so, control, according to the target distance and the correspondence between the object distance and the focal distance of the aerial camera, the aerial camera to perform focusing.

In a third aspect, an embodiment of the disclosure provides an aerial camera. The aerial camera is carried on a UAV by using a gimbal. The aerial camera is defined in appended claim 6 and includes:

> a camera housing;
> a lens module, disposed in the camera housing;
> at least one processor; and
> a memory, connected to the at least one processor.

The memory stores instructions executable by the at least one processor. The instructions, when executed by the at least one processor, cause the at least one processor to perform the foregoing method.

In a fourth aspect, an embodiment of the disclosure provides a UAV. The UAV is defined in appended claim 7 and includes

> a fuselage;
> an arm, connected to the fuselage;
> a power apparatus, disposed on the arm and configured to provide power for flight of the UAV;
> a gimbal, connected to the fuselage;
> the foregoing aerial camera, mounted to the UAV by using the gimbal; and
> a depth camera, communicatively connected to the aerial camera and configured to acquire an actual distance between a to-be-photographed object and the depth camera.

In an embodiment, the depth camera is mounted to the camera housing.

In an embodiment, there are a plurality of depth cameras disposed on the fuselage of the UAV and configured to acquire an actual distance between the to-be-photographed object and the UAV in a plurality of directions.

Beneficial effects of the embodiments of the disclosure are as follows. In the embodiments of the disclosure, the aerial camera acquires the actual distance between the to-be-photographed object and the depth camera by using the depth camera, determines the target distance between the aerial camera and the to-be-photographed object according to the actual distance, and controls, according to the target distance and the correspondence between the object distance and the focal distance of the aerial camera, the aerial camera to perform focusing. By means of the embodiments of the disclosure, the focal distance of the aerial camera can be quickly determined. Therefore, the focusing speed and the focusing accuracy of the aerial camera can be improved.

BRIEF DESCRIPTION OF THE DRAWINGS

One or more embodiments are exemplarily described with reference to the corresponding figures in the accompanying drawings, and the descriptions are not to be construed as limiting the embodiments. Components in the accompanying drawings that have same reference numerals are represented as similar components, and unless otherwise particularly stated, the figures in the accompanying drawings are not drawn to scale.

> FIG. 1 is a schematic structural diagram of an implementation environment according to an embodiment of the disclosure.
> FIG. 2 is a schematic principle diagram of binocular ranging according to an embodiment of the disclosure.
> FIG. 3 is a flowchart of a focusing method according to an embodiment of the disclosure.
> FIG. 4 is a flowchart of a focusing method according to another embodiment of the disclosure.
> FIG. 5 is a top view of a fuselage of a UAV according to an embodiment of the disclosure.
> FIG. 6 is a top view of a fuselage of a UAV according to another embodiment of the disclosure.
> FIG. 7 is a schematic diagram of a focusing apparatus according to an embodiment of the disclosure.
> FIG. 8 is a schematic diagram of a focusing apparatus according to another embodiment of the disclosure.
> FIG. 9 is a schematic structural diagram of hardware of an aerial camera according to an embodiment of the disclosure.

## DETAILED DESCRIPTION

The technical solutions in the embodiments of the disclosure are described below in detail with reference to the accompanying drawings. Apparently, the described embodiments are some rather than all of the embodiments of the disclosure. All other embodiments obtained by a person of ordinary skill in the art based on the embodiments of the disclosure without creative efforts and falling within the scope of the appended claims shall fall within the protection scope of the disclosure.

It should be noted that, when a component is expressed as "being fixed to" another component, the component may be directly on the another component, or one or more intermediate components may exist between the component and the another component. When one component is expressed as "being connected to" another component, the component may be directly connected to the another component, or one or more intermediate components may exist between the component and the another component. The terms "vertical", "horizontal", "left", "right", and similar expressions in this specification are merely used for an illustrative purpose.

In addition, technical features involved in different implementations of the disclosure described below may be combined together if there is no conflict.

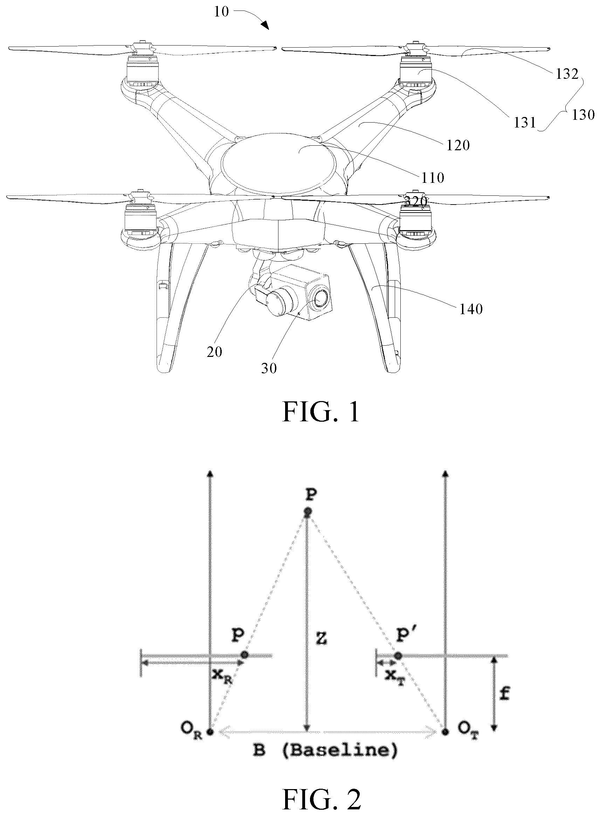

FIG. 1 is a schematic diagram of an implementation environment according to embodiments of the disclosure. As shown in FIG. 1, the implementation environment includes a UAV 10, a gimbal 20 and an aerial camera 30. The aerial camera 30 is carried on the UAV 10 by using the gimbal 20 for photographing and video recording.

The UAV 10 includes a fuselage 110, arms 120 connected to the fuselage 110 and power apparatuses 130 respectively disposed on the arms 120. The power apparatus 130 are configured to provide power for flight of the UAV 10. Each of the power apparatuses 130 includes a motor 131 (such as a brushless motor) and a propeller 132 connected to the motor 131. The UAV 10 shown in the figure is a quad-rotor UAV. A quantity of the power apparatuses 130 is four. In other possible embodiments, the UAV 10 may be a tri-rotor UAV, a hexa-rotor UAV, or the like.

Optionally, the UAV 10 further includes an undercarriage 140 connected to a bottom of the fuselage 110 or the arms 120.

The gimbal 20 is configured to fix the aerial camera 30, or discretionarily adjust an attitude of the aerial camera 30 (for example, change a photographing direction of the aerial camera 30) and stably maintain the aerial camera 30 at a preset attitude. The gimbal 20 includes a base, a motor and a motor controller. The base is fixedly or detachably connected to the UAV 10, and is configured to carry the aerial camera 30 on the UAV 10. The motor is mounted to the base, and is connected to the aerial camera 30. The motor controller is electrically connected to the motor, and is configured to control the motor. The gimbal 20 may be a multi-shaft gimbal. Correspondingly, the motor includes a plurality of motors. That is to say, one motor is disposed on each shaft.

On one hand, the plurality of motors can drive the aerial camera 30 to rotate, to adjust the aerial camera 30 in different photographing directions. The motors are manually and remotely controlled to rotate or automatically rotate by using a program to achieve omnidirectional scanning and monitoring. On the other hand, during the aerial photography of the UAV 10, disturbance to the aerial camera 30 is offset in real time by means of the rotation of the motors. In this way, the aerial camera is prevented from shaking, and the stability of a photographing screen is guaranteed.

The aerial camera 30 includes a camera housing and a video camera connected to the camera housing. A gimbal connecting member is disposed on the camera housing, and is configured to be connected to the gimbal 20. A depth camera is also mounted to the camera housing. The depth camera and a main video camera are mounted to a same surface of the camera housing. The depth camera may be horizontally, longitudinally or obliquely mounted on the mounting surface. When the gimbal 20 is rotated, the depth camera and the video camera are always synchronously moved in a same direction.

The depth camera is configured to acquire an actual distance between a to-be-photographed object and the depth camera. In a specific implementation, the depth camera may be a TOF camera, a binocular camera or a structured light camera. The working principles of the three cameras are different. The TOF camera performs direct measurement according to a flight time of light. The binocular camera performs indirect calculation by means of triangulation according to RGB image feature point matching. The structured light camera actively projects a known coding pattern and performs calculation according to a feature matching effect.

For example, the depth camera is a binocular camera. Two cameras take a photograph of a same scene at a same moment. Corresponding imaging points of the same scene in the two views are matched by using various matching algorithms to obtain a parallax map. Therefore, depth information of the imaging points can be calculated. That is to say, distances between the imaging points and planes where lenses of the depth cameras are located can be calculated.

As shown in FIG. 2, P is a point on the to-be-photographed object. $O_R$ and $O_T$ are respectively optical centers of the two cameras. Imaging points of the point P on photoreceptors of the two cameras are respectively P and P' (imaging planes of the cameras are rotated to a front of the lenses). f is a focal distance of each camera. B is a distance between centers of the two cameras. Z is to-be-calculated depth information. A distance from the point P to the point P' is set as dis. In this case,

$$\mathrm{dis} = B - (X_R - X_T)$$

According to the following principle of similar triangle:

$$\frac{B-(X_R-X_T)}{B} = \frac{Z-f}{Z},$$

it may be learned that

$$Z = \frac{fB}{X_R-X_T}.$$

The focal distance f and the distance B between the centers of the cameras may be obtained by means of calibration. Thus, as long as a value of parallax of an imaging point of the to-be-photographed object (that is, a parallax d) is obtained, the depth information can be calculated. Since the depth camera and the video camera are both mounted to the camera housing, the aerial camera 30 may read the depth information of the imaging points that is provided by the depth camera, to perform focusing according to the depth information and a correspondence between an object distance and a focal distance of the aerial camera.

In another implementation environment, a gyroscope (such as a MEMS gyroscope) is disposed in the aerial camera 30. Depth cameras are disposed on the fuselage of the UAV 10 in different directions. For example, the depth cameras are disposed on the fuselage in a forward direction, a rearward direction, a leftward direction, a rightward direction and a downward direction respectively, and are configured to perform detection for obstacle avoidance. Likewise, each depth camera may be horizontally, longitudinally or obliquely mounted to a mounting surface.

When the gimbal 20 rotates, the gyroscope may detect a position change of the aerial camera 30 in real time and provide attitude information of the aerial camera. The attitude information includes a photographing direction of the aerial camera 30 and an angle of tilt of the gimbal. The aerial camera 30 may select, from the plurality of depth cameras according to the attitude information, a depth camera matching the attitude information as a target depth camera. Therefore, the aerial camera acquires depth information of an imaging point that is provided by the target depth camera, calculates a target distance between the target depth camera and the to-be-photographed object according to the depth information and the angle of tilt of the gimbal, and performs focusing according to the target distance and the correspondence between the object distance and the focal distance of the aerial camera.

It needs to be noted that, the gyroscope is not necessary in the aerial camera 30. Generally, a position coder is connected to each motor for detecting in real time a position of the each motor after rotation. In another implementation of the implementation environment, the aerial camera 30 may acquire the attitude information of the aerial camera by acquiring the position of the each motor after rotation.

Based on the foregoing description, the embodiments of the disclosure are further described below with reference to the drawings.

Embodiment 1

FIG. 2 is a flowchart of a focusing method according to an embodiment of the disclosure. The method is applicable to an aerial camera. The aerial camera is mounted to a UAV by using a gimbal. The aerial camera includes a camera housing and a video camera connected to the camera housing. A depth camera is also mounted to the camera housing. The method includes the following steps:

Step 210: Acquire an actual distance between a to-be-photographed object and the depth camera by using the depth camera.

For example, the depth camera is a binocular camera. The depth camera first takes a photograph of the to-be-photographed object to obtain two pieces of image information of the to-be-photographed object. After an image processor of the depth camera processes the two pieces of image information, the actual distance between the to-be-photographed object and the depth camera is calculated according to parallax data of an imaging point of the to-be-photographed object and a formula

$$Z = \frac{fB}{X_R-X_T}.$$ Then, the calculated actual distance is outputted to the image processor of the aerial camera or transmitted to the image processor of the aerial camera by an image transmission chip of the UAV. Therefore, the aerial camera can acquire the actual distance between the to-be-photographed object and the depth camera.

It may be understood that, the depth camera and the aerial camera may share one image processor. In this case, the aerial camera directly performs the foregoing image processing method, to obtain the actual distance between the to-be-photographed object and the depth camera.

Step 220: Determine that the actual distance is the target distance between the aerial camera and the to-be-photographed object.

Since the depth camera and the video camera are both mounted to the camera housing, the actual distance is a distance between the aerial camera and the to-be-photographed object.

Step 230: Acquire a correspondence between an object distance and a focal distance of the aerial camera, and determine whether the target distance is less than or equal to a preset distance threshold.

For a zoom lens, a smaller focal distance brings a larger horizontal field of view and thereby brings a smaller image, and a larger focal distance brings a smaller horizontal field of view and thereby brings a larger photographed object. The preset distance threshold may be an object distance corresponding to a shortest focal distance of the video camera. The object distance is a farthest one of distances within which an image of an object maintains to be clear. Alternatively, the preset distance threshold may be slightly greater than the farthest distance.

When the target distance is greater than the preset distance threshold, it may be deemed that the to-be-photographed object is far beyond imagination. Therefore, focusing is not required, and step 210 is performed. When the target distance is less than or equal to the preset distance threshold, step 240 is performed.

Step 240: Control, according to the target distance and the correspondence between the object distance and the focal distance of the aerial camera, the aerial camera to perform focusing.

The correspondence between the object distance and the focal distance is the inherent attribute of a lens. A different lens has a different correspondence between an object distance and a focal distance. Generally, the correspondence is in a form of an object distance table. The aerial camera determines, according to the target distance and the correspondence between the object distance and the focal distance of the aerial camera, a distance by which a lens needs to be moved, to control a focusing assembly to perform focusing on the lens of the aerial camera.

In this embodiment, the actual distance between the to-be-photographed object and the depth camera is acquired by using the depth camera, the actual distance is determined as the target distance between the aerial camera and the to-be-photographed object, and the aerial camera is controlled according to the target distance and the correspondence between the object distance and the focal distance of the aerial camera to perform focusing. By means of this embodiment, the focal distance of the aerial camera can be quickly determined. Therefore, the focusing speed and the focusing accuracy of the aerial camera can be improved.

Embodiment 2

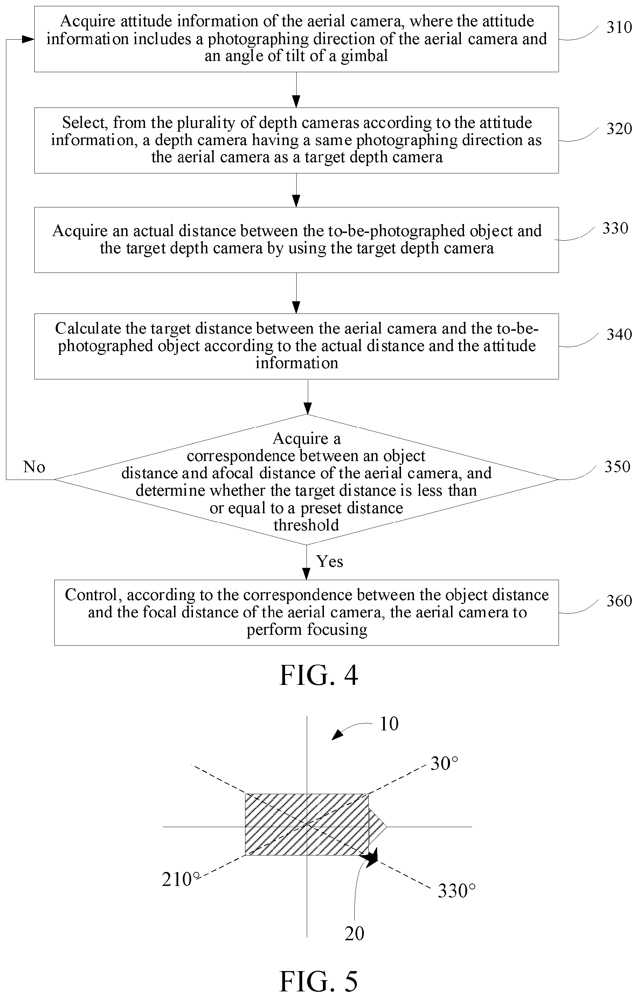

FIG. 4 is a flowchart of another focusing method according to an embodiment of the disclosure. The method is applicable to an aerial camera. The aerial camera is mounted to a UAV by using a gimbal. A plurality of depth cameras are disposed on a fuselage of the UAV in different directions. The plurality of depth cameras are configured to acquire an actual distance between a to-be-photographed object and the UAV in a plurality of directions. The method includes the following steps:
Step 310: Acquire attitude information of the aerial camera, where the attitude information includes a photographing direction of the aerial camera and an angle of tilt of the gimbal.

The photographing direction of the aerial camera is a direction of the video camera of the aerial camera relative to a nose of the UAV. The angle of tilt of the gimbal is an included angle between the video camera of the aerial camera and a plane where the fuselage of the UAV is located.

Exemplarily, a gyroscope is disposed in the aerial camera, and the UAV horizontally flies forward. When a direction of the gyroscope is horizontally forward, the photographing direction of the aerial camera is defined as a forward direction, and the angle of tilt of the gimbal is 0°. When the direction of the gyroscope is vertically downward, the photographing direction of the aerial camera is defined as a downward direction, and the angle of tilt of the gimbal is 90°. When the video camera of the aerial camera is rightward relative to the nose of the UAV 10, and the video camera deflects downward by 30°, the direction of the aerial camera is defined as a rightward direction, and the angle of tilt of the gimbal is 30°.

In a preferred solution, the acquiring the photographing direction of the aerial camera includes:

     acquiring a deflection angle of the video camera of the aerial camera relative to the nose of the UAV; and determining the photographing direction of the aerial camera according to the deflection angle and a correspondence between a preset deflection angle range and the photographing direction.

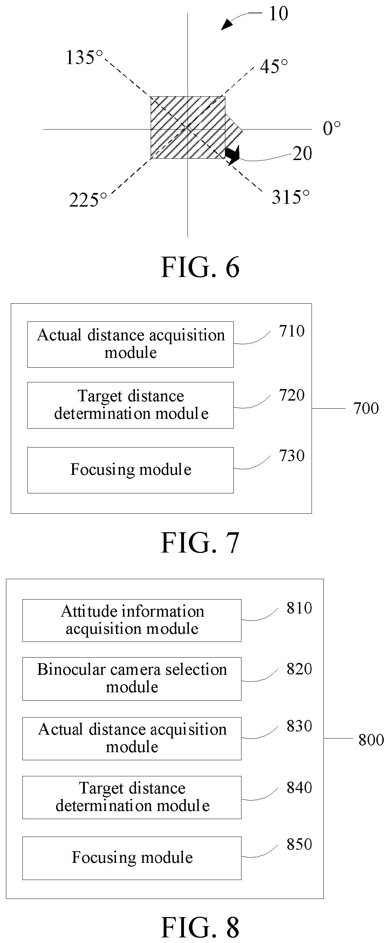

FIG. 5 and FIG. 6 are top views of the UAV 10. Under a same deflection angle of the video camera of the aerial camera 20 relative to the nose of the UAV, the photographing direction of the aerial camera 20 may also be defined differently. The photographing direction is specifically defined depending on a shape of the fuselage of the UAV 10. By means of the correspondence between the preset deflection angle range and the photographing direction, the photographing direction of the aerial camera 20 relative to the UAV can be determined more accurately.

Step 320: Select, from the plurality of depth cameras according to the attitude information, a depth camera having a same photographing direction as the aerial camera as a target depth camera.

In an implementation, the plurality of depth cameras include a forward-looking depth camera disposed on a front portion of the fuselage of the UAV, a rearward-looking depth camera disposed on a rear portion of the fuselage, a leftward-looking depth camera disposed on a left portion of the fuselage, a rightward-looking depth camera disposed on a right portion of the fuselage and a downward-looking depth camera disposed on a lower portion of the fuselage.

The selecting, from the plurality of depth cameras according to the attitude information, a depth camera having a same photographing direction as the aerial camera as a target depth camera specifically includes:

(I) when the angle of tilt of the gimbal is in a range of 0° to 45°, and when the acquired photographing direction of the aerial camera is a forward direction, selecting the forward-looking depth camera as the target depth camera; or

when the acquired photographing direction of the aerial camera is a rearward direction, selecting the rearward-looking depth camera as the target depth camera; or
when the acquired photographing direction of the aerial camera is a leftward direction, selecting the leftward-looking depth camera as the target depth camera; or
when the acquired photographing direction of the aerial camera is a rightward direction, selecting the rightward-looking depth camera as the target depth camera; or

(II) when the angle of tilt of the gimbal is in a range of 45° to 90°, selecting the downward-looking depth camera as the target depth camera.

Step 330: Acquire an actual distance between a to-be-photographed object and the target depth camera by using the target depth camera.

Similarly, the target depth camera is a binocular camera, for example. The target depth camera first takes a photograph of the to-be-photographed object to obtain two pieces of image information of the to-be-photographed object. After an image processor of the depth camera processes the two pieces of image information, the actual distance between the to-be-photographed object and the target depth camera is calculated according to parallax data of an imaging point of the to-be-photographed object and a formula

$$Z = \frac{fB}{X_R - X_T}.$$

The image processor of the aerial camera may directly read the actual distance outputted by the image processor of the target depth camera, or acquire the actual distance calculated by the target depth camera by using an image transmission chip of the UAV. In the latter case, the target depth cameras are all connected to the image transmission chip of the UAV.

It needs to be noted that, during specific implementation, a plurality of target depth cameras may be used. The actual distance between the to-be-photographed object and the target depth camera may be acquired by using any of the target depth camera. Alternatively, an average value of actual distances acquired by the plurality of target depth cameras may be used.

For example, when the fuselage of the UAV is a hexagon, two forward-looking depth cameras are disposed on the front portion of the fuselage of the UAV, and two rearward-looking depth cameras are disposed on the rear portion of the fuselage. When the acquired photographing direction of the aerial camera is a forward direction, the two forward-looking depth cameras are the target depth cameras. The actual distance between the to-be-photographed object and the target depth camera may be acquired by using any of the target depth cameras. Alternatively, an average value of the actual distances acquired by the two target depth cameras may be used.

Step 340: Calculate a target distance between the aerial camera and the to-be-photographed object according to the actual distance and the attitude information.

When the angle of tilt of the gimbal is in a range of 0° to 45°, a formula for calculating the target distance is $L = L1 \cdot \cos\alpha + L2$. When the angle of tilt of the gimbal is in a range of 45° to 90°, a formula for calculating the target distance is $L = L1 \cdot \cos(90° - \alpha) + L2$.

L1 is the actual distance between the to-be-photographed object and the target depth camera that is acquired by using the target depth camera. $\alpha$ is the angle of tilt of the gimbal. L2 is a distance between the aerial camera and the target depth camera in the photographing direction of the aerial camera.

During actual application, the aerial camera is generally mounted under the UAV. When the photographing direction of the aerial camera varies, a distance between the aerial camera and an end surface of the fuselage of the UAV also varies. Therefore, a distance between the aerial camera and the target depth camera also varies. It may be understood that, in the photographing direction of the aerial camera, if an end surface of the fuselage is in front of the aerial camera, L2 is positive, or if the end surface of the fuselage is behind the aerial camera, L2 is negative.

Step 350: Acquire a correspondence between an object distance and a focal distance of the aerial camera, and determine whether the target distance is less than or equal to a preset distance threshold.

Step 360: Control, according to the target distance and the correspondence between the object distance and the focal distance of the aerial camera, the aerial camera to perform focusing.

For step 350 and step 360, reference may be made to step 230 and step 240 in Embodiment 1. Details will not be described again herein.

In this embodiment, the attitude information of the aerial camera is acquired, the depth camera having the same photographing direction as the aerial camera is selected as the target depth camera from the plurality of depth cameras according to the attitude information, the actual distance between the to-be-photographed object and the target depth camera is calculated by using the target depth camera, the target distance between the aerial camera and the to-be-photographed object is calculated according to the actual distance and the attitude information, and the aerial camera is controlled according to the target distance and the correspondence between the object distance and the focal distance of the aerial camera to perform focusing. By means of this embodiment, the focal distance of the aerial camera can be quickly determined. Therefore, the focusing speed and the focusing accuracy of the aerial camera can be improved.

Embodiment 3

FIG. 7 is a schematic diagram of a focusing apparatus according to an embodiment of the disclosure. The apparatus 700 is applicable to an aerial camera. The aerial camera is mounted to a UAV by using a gimbal. The aerial camera includes a camera housing and a video camera connected to the camera housing. A depth camera is also mounted to the camera housing. The apparatus 700 includes:

  an actual distance acquisition module 710, configured to acquire an actual distance between a to-be-photographed object and the depth camera by using the depth camera;
  a target distance determination module 720, configured to determine a target distance between the aerial camera and the to-be-photographed object according to the actual distance; and
  a focusing module 730, configured to control, according to the target distance, the aerial camera to perform focusing.

Since the depth camera and the video camera are both mounted to the camera housing, the actual distance is a distance between the aerial camera and the to-be-photographed object. The target distance determination module 720 is further configured to determine that the actual distance is the target distance between the aerial camera and the to-be-photographed object.

In a preferred solution, the focusing module 730 is configured to:

  acquire a correspondence between an object distance and a focal distance of the aerial camera;
  determine whether the target distance is less than or equal to a preset distance threshold; and
  if so, control, according to the target distance and the correspondence between the object distance and the focal distance of the aerial camera, the aerial camera to perform focusing.

In this embodiment, the actual distance between the to-be-photographed object and the depth camera is acquired by using the actual distance acquisition module 710, the actual distance is determined by the target distance determination module 720 as the target distance between the aerial camera and the to-be-photographed object, and the aerial camera is controlled by the focusing module 730 according to the target distance and the correspondence between the object distance and the focal distance of the aerial camera to perform focusing. By means of this embodiment, the focal distance of the aerial camera can be quickly determined. Therefore, the focusing speed and the focusing accuracy of the aerial camera can be improved.

Embodiment 4

Referring to FIG. 8, FIG. 8 is a schematic diagram of another focusing apparatus according to an embodiment of the disclosure. The apparatus 800 is applicable to an aerial camera. The aerial camera is mounted to a UAV by using a gimbal. A plurality of depth cameras are disposed on a fuselage of the UAV in different directions. The plurality of depth cameras are configured to acquire an actual distance between a to-be-photographed object and the UAV in a plurality of directions. The apparatus 800 includes:

  an attitude information acquisition module 810, configured to acquire attitude information of the aerial camera, where the attitude information includes a photographing direction of the aerial camera and an angle of tilt of the gimbal; and
  a depth camera selection module 820, configured to select, from the plurality of depth cameras according to the attitude information, a depth camera having a same photographing direction as the aerial camera as a target depth camera;
  an actual distance acquisition module 830, configured to acquire an actual distance between the to-be-photographed object and the target depth camera by using the target depth camera;
  a target distance determination module 840, configured to calculate a target distance between the aerial camera and the to-be-photographed object according to the actual distance and the attitude information; and
  a focusing module 850, configured to control, according to the target distance and a correspondence between an object distance and a focal distance of the aerial camera, the aerial camera to perform focusing.

The photographing direction of the aerial camera is a direction of the video camera of the aerial camera relative to a nose of the UAV. The angle of tilt of the gimbal is an included angle between the video camera of the aerial camera and a plane where the fuselage of the UAV is located.

In a preferred solution, the apparatus 800 further includes::

acquiring a deflection angle of the video camera of the aerial camera relative to the nose of the UAV; and determining the photographing direction of the aerial camera according to the deflection angle and a correspondence between a preset deflection angle range and the photographing direction.

In an implementation, the plurality of depth cameras include a forward-looking depth camera disposed on a front portion of the fuselage of the UAV, a rearward-looking depth camera disposed on a rear portion of the fuselage, a leftward-looking depth camera disposed on a left portion of the fuselage, a rightward-looking depth camera disposed on a right portion of the fuselage and a downward-looking depth camera disposed on a lower portion of the fuselage.

The depth camera selection module 820 is further configured to:

(I) when the angle of tilt of the gimbal is in a range of 0° to 45°, and when the acquired photographing direction of the aerial camera is a forward direction, select the forward-looking depth camera as the target depth camera; or

when the acquired photographing direction of the aerial camera is a rearward direction, select the rearward-looking depth camera as the target depth camera; or
when the acquired photographing direction of the aerial camera is a leftward direction, select the leftward-looking depth camera as the target depth camera; or
when the acquired photographing direction of the aerial camera is a rightward direction, select the rightward-looking depth camera as the target depth camera; or

(II) when the angle of tilt of the gimbal is in a range of 45° to 90°, select the downward-looking depth camera as the target depth camera.

Further, the target distance determination module 840 is configured to:

when the angle of tilt of the gimbal is in a range of 0° to 45°, calculate the target distance according to a formula $L = L1 \cdot \cos\alpha + L2$;
when the angle of tilt of the gimbal is in a range of 45° to 90°, calculate the target distance according to a formula $L = L1 \cdot \cos(90° - \alpha) + L2$.

L1 is the actual distance between the to-be-photographed object and the target depth camera that is acquired by using the target depth camera. $\alpha$ is the angle of tilt of the gimbal. L2 is a distance between the aerial camera and the target depth camera in the photographing direction of the aerial camera. In the photographing direction of the aerial camera, if an end surface of the fuselage is in front of the aerial camera, L2 is positive, or if the end surface of the fuselage is behind the aerial camera, L2 is negative.

In a preferred solution, the focusing module 850 is configured to:

acquire a correspondence between an object distance and a focal distance of the aerial camera;
determine whether the target distance is less than or equal to a preset distance threshold; and
if so, control, according to the target distance and the correspondence between the object distance and the focal distance of the aerial camera, the aerial camera to perform focusing.

It needs to be noted that, in Embodiment 3 and Embodiment 4 of the disclosure, the focusing apparatus 700 and focusing apparatus 800 may respectively perform the focusing methods respectively provided in Embodiment 1 and Embodiment 2 of the disclosure. The focusing apparatuses have corresponding functional modules for performing the methods and corresponding beneficial effects. For technical details not described in detail in the apparatus embodiments, reference may be made to the focusing method provided in the embodiments of the disclosure.

Embodiment 5

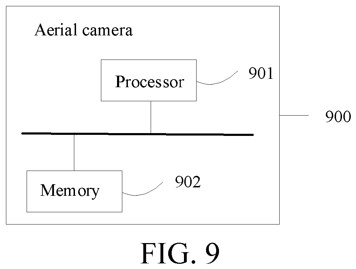

FIG. 9 shows an aerial camera according to an embodiment of the disclosure. The aerial camera is mounted to a UAV by using a gimbal. The aerial camera 900 includes

at least one processor 901 and a memory 902 communicatively connected to the at least one processor 901. In FIG. 9, one processor 901 is exemplified.

The processor 901 and the memory 902 may be connected by a bus or in other manners. In FIG. 9, the processor and the memory are connected by a bus, for example.

As a non-volatile computer-readable storage medium, the memory 902 may be configured to store a non-volatile software program, a non-volatile computer-executable program and module. For example, the memory stores program instructions/modules (such as the actual distance acquisition module 710, the target distance determination module 720 and the focusing module 730 shown in FIG. 7, and the attitude information acquisition module 810, the depth camera selection module 820, the actual distance acquisition module 830, the target distance determination module 840 and the focusing module 850 shown in FIG. 8) corresponding to the focusing method in the embodiments of the disclosure. The processor 901 executes various functional applications and data processing of the aerial camera by executing the non-volatile software program, the instruction and the module stored in the memory 902. That is to say, the processor implements the focusing method in the foregoing method embodiments.

The memory 902 may include a program storage area and a data storage area. The program storage area may store an operating system and an application program required for at least one function. The data storage area may store data created according to use of the gimbal and the like. In addition, the memory 902 may include a high-speed random access memory, and may further include a non-volatile memory, such as at least one magnetic disk memory device, a flash memory device, or other non-volatile solid-state memory devices. In some embodiments, the memory 902 may optionally include memories remotely disposed relative to the processor 901. The remote memories may be connected to a gimbal by a network. An embodiment of the network includes but is not limited to, the Internet, an intranet, a local area network, a mobile communication network and a combination thereof.

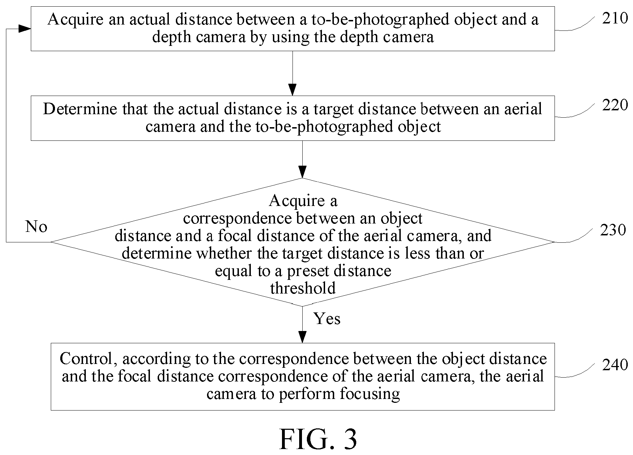

The one or more modules are stored in the memory 902. When executed by the one or more processors 901, the one or more modules perform the focusing method in the foregoing method embodiments. For example, the one or more modules perform the foregoing steps of the methods in FIG. 3 and FIG. 4 to implement the functions of the modules in FIG. 7 and FIG. 8.

The aerial camera 900 may perform the focusing method provided in the embodiments of the disclosure. The aerial camera has the corresponding functional modules for performing the method and corresponding beneficial effects. For technical details not described in detail in this embodiment, reference may be made to the focusing method provided in the embodiments of the disclosure.

Embodiment 6

Embodiments of the disclosure provide a computer program product, including a computer program stored in a non-volatile computer-readable storage medium, the computer program including program instructions, the program instructions, when being used to be executed by an aerial camera, causing the computer to implement the focusing method as described above. For example, perform the method and steps in FIG. 3 and FIG. 4 described above to implement the functions of the modules in FIG. 7 and FIG. 8.

Embodiments of the disclosure further provide a non-volatile computer-readable storage medium, the computer-readable storage medium storing computer-executable instructions, the computer-executable instructions, when being used to be executed by an aerial camera, causing the computer to implement the focusing method as described above. For example, perform the method and steps in FIG. 3 and FIG. 4 described above to implement the functions of the modules in FIG. 7 and FIG. 8.

It needs to be noted that the described apparatus embodiment is merely an example. The modules described as separate parts may or may not be physically separate, and parts displayed as modules may or may not be physical modules, may be located in one position, or may be distributed on a plurality of network modules. Some or all of the modules may be selected according to actual requirements to implement the objectives of the solutions of the embodiments.

Through the description of the foregoing embodiments, a person skilled in the art may clearly understand that the embodiments may be implemented by software in combination with a universal hardware platform, and may certainly be implemented by hardware. A person of ordinary skill in the art may understand that all or some of the processes of the methods in the embodiments may be implemented by a computer program instructing relevant hardware. The program may be stored in a computer-readable storage medium. During execution of the program, the processes of the method embodiments may be performed. The foregoing storage medium may be a read-only memory (ROM), a random access memory (RAM), or the like.

Finally, it should be noted that: the foregoing embodiments are merely used for describing the technical solutions of the disclosure, but are not intended to limit the disclosure. Under the ideas of the disclosure, the technical features in the foregoing embodiments or different embodiments may also be combined, the steps may be performed in any order, and many other changes of different aspects of the disclosure also exists as described above, and these changes are not provided in detail for simplicity. Although the disclosure is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements will not cause the essence of corresponding technical solutions to depart from the scope of the technical solutions in the embodiments of the disclosure, whose scope is defined by the appended claims.

**Claims**

1. A focusing method, the method being applicable to an aerial camera (30), and the aerial camera (30) is carried on an unmanned aerial vehicle, UAV, (10) by using a gimbal (20), the UAV (10) comprising a plurality of depth cameras disposed on a fuselage of the UAV (10) and configured to acquire an actual distance between the to-be-photographed object and the UAV (10) in a plurality of directions, the method comprising:

   acquiring attitude information of the aerial camera (30), the attitude information comprising a photographing direction of the aerial camera (30) and an angle of tilt of the gimbal (20);

selecting, from the plurality of depth cameras according to the attitude information, a depth camera having a same photographing direction as the aerial camera (30) as a target depth camera;

acquiring an actual distance between a to-be-photographed object and the target depth camera by using the target depth camera;

calculating a target distance between the aerial camera (30) and the to-be-photographed object according to the actual distance and the attitude information of the aerial camera (30); and

controlling, according to the target distance, the aerial camera (30) to perform focusing,

wherein the calculating the target distance between the aerial camera (30) and the to-be-photographed object according to the actual distance and the attitude information comprises:

> when the angle of tilt of the gimbal (20) is in a range of 0° to 45°, calculating the target distance according to the following formula:

$$L = L1 \cdot \text{Cos}\alpha + L2;$$

> when the angle of tilt of the gimbal (20) is in a range of 45° to 90°, calculating the target distance according to the following formula:

$$L = L1 \cdot \text{Cos}(90° - \alpha) + L2,$$

> wherein
> L1 is the actual distance between the to-be-photographed object and the target depth camera that is acquired by using the target depth camera, $\alpha$ is the angle of tilt of the gimbal (20), and L2 is a distance between the aerial camera (30) and the target depth camera in the photographing direction of the aerial camera (30).

2. The method according to claim 1, **characterized in that** the aerial camera (30) comprises a camera housing and a video camera connected to the camera housing, and the depth camera is mounted to the camera housing; and

the determining a target distance between the aerial camera (30) and the to-be-photographed object according to the actual distance comprises:

determining that the actual distance is the target distance between the aerial camera (30) and the to-be-photographed object.

3. The method according to claim 1, **characterized in that** a gyroscope is disposed in the aerial camera (30), and the acquiring attitude information of the aerial camera (30) comprises:

acquiring the attitude information of the aerial camera (30) by using the gyroscope.

4. The method according to claim 1 or 3, **characterized in that** the plurality of depth cameras comprise a forward-looking depth camera disposed on a front portion of the fuselage of the UAV (10), a rearward-looking depth camera disposed on a rear portion of the fuselage, a leftward-looking depth camera disposed on a left portion of the fuselage, a rightward-looking depth camera disposed on a right portion of the fuselage and a downward-looking depth camera disposed on a lower portion of the fuselage; and

the selecting, from the plurality of depth cameras according to the attitude information, a depth camera having a same photographing direction as the aerial camera (30) as a target depth camera specifically comprises:

> when the angle of tilt of the gimbal (20) is in a range of 0° to 45°, and when the acquired photographing direction of the aerial camera (30) is a forward direction, selecting the forward-looking depth camera as the target depth camera; or
> when the acquired photographing direction of the aerial camera (30) is a rearward direction, selecting the rearward-looking depth camera as the target depth camera; or
> when the acquired photographing direction of the aerial camera (30) is a leftward direction, selecting the leftward-looking depth camera as the target depth camera; or
> when the acquired photographing direction of the aerial camera (30) is a rightward direction, selecting the rightward-looking depth camera as the target depth camera; or
> when the angle of tilt of the gimbal (20) is in a range of 45° to 90°, selecting the downward-looking depth camera as the target depth camera.

5. The method according to any of claims 1 to 4, **characterized in that** the controlling, according to the target distance, the aerial camera (30) to perform focusing comprises:

> acquiring a correspondence between an object distance and a focal distance of the aerial camera (30);
> determining whether the target distance is less than or equal to a preset distance threshold; and
> if so, controlling, according to the target distance and the correspondence between the object distance and the focal distance of the aerial camera (30), the aerial camera (30) to perform focusing.

6. An aerial camera (30), mounted to a UAV (10) by using a gimbal (20), the UAV (10) comprising a plurality of depth cameras, the aerial camera (30) comprising:

a camera housing;
a lens module, disposed in the camera housing;
at least one processor; and
a memory, connected to the at least one processor, **characterized in that**
the memory stores instructions executable by the at least one processor, the instructions, when executed by the at least one processor, causing the at least one processor to perform the focusing method according to any of claims 1 to 5.

7. An unmanned aerial vehicle, UAV (10), comprising:

a fuselage;
an arm, connected to the fuselage;
a power apparatus, disposed on the arm and configured to provide power for flight of the UAV (10);
a gimbal (20), connected to the fuselage;
an aerial camera (30), mounted to the UAV (10) by using the gimbal (20); and
a plurality of depth cameras disposed on a fuselage of the UAV (10), communicatively connected to the aerial camera (30) and configured to acquire an actual distance between a to-be-photographed object and the depth camera in a plurality of directions;
the aerial camera (30) comprising:

a camera housing;
a lens module, disposed in the camera housing;
at least one processor; and
a memory, connected to the at least one processor, **characterized in that**
the memory stores instructions executable by the at least one processor, the instructions, when executed by the at least one processor, causing the at least one processor to perform the focusing method according to any of claims 1-5.

8. The UAV (10) according to claim 7, **characterized in that**
the depth camera is mounted to the camera housing.

9. The UAV (10) according to claim 7, **characterized in that**
a gyroscope is disposed in the aerial camera (30), and the gyroscope is configured to acquire attitude information of the aerial camera (30).

**Patentansprüche**

1. Fokussierungsverfahren, das auf eine Luftkamera (30) anwendbar ist, die unter Verwendung eines Kardanrahmens (20) auf einem unbemannten Luftfahrzeug (UAV) (10) angebracht ist, wobei das UAV (10) mehrere Tiefenkameras umfasst, die an einem Rumpf des UAV (10) angeordnet und dazu konfiguriert sind, eine tatsächliche Entfernung zwischen dem zu fotografierenden Objekt und dem UAV (10) in mehreren Richtungen zu erfassen, wobei das Verfahren Folgendes umfasst:

Erfassen von Lageinformationen der Luftkamera (30), wobei die Lageinformationen eine Aufnahmerichtung der Luftkamera (30) und einen Neigungswinkel des Kardanrahmens (20) umfassen;
Auswählen einer Tiefenkamera mit derselben Aufnahmerichtung wie die Luftkamera (30) als Ziel-Tiefenkamera aus den mehreren Tiefenkameras in Abhängigkeit von den Lageinformationen;
Erfassen einer tatsächlichen Entfernung zwischen einem zu fotografierenden Objekt und der Ziel-Tiefenkamera unter Verwendung der Ziel-Tiefenkamera;
Berechnen einer Zielentfernung zwischen der Luftkamera (30) und dem zu fotografierenden Objekt in Abhängigkeit von der tatsächlichen Entfernung und den Lageinformationen der Luftkamera (30); und
Steuern der Luftkamera (30) in Abhängigkeit von der Zielentfernung, um eine Fokussierung durchzuführen, wobei das Berechnen der Zielentfernung zwischen der Luftkamera (30) und dem zu fotografierenden Objekt in Abhängigkeit von der tatsächlichen Entfernung und den Lageinformationen Folgendes umfasst:

Berechnen der Zielentfernung gemäß der folgenden Formel, wenn der Neigungswinkel des Kardanrahmens (20) in einem Bereich von 0° bis 45° liegt:

$$L = L1 \cdot \text{Cos}\alpha + L2;$$

Berechnen der Zielentfernung gemäß der folgenden Formel, wenn der Neigungswinkel des Kardanrahmens (20) in einem Bereich von 45° bis 90° liegt:

$$L = L1 \cdot \mathrm{Cos}(90°\text{-}\alpha) + L2,$$

wobei
L1 die tatsächliche Entfernung zwischen dem zu fotografierenden Objekt und der Ziel-Tiefenkamera, die unter Verwendung der Ziel-Tiefenkamera erfasst wird, a der Neigungswinkel des Kardanrahmens (20) und L2 eine Entfernung zwischen der Luftkamera (30) und der Ziel-Tiefenkamera in der Aufnahmerichtung der Luftkamera (30) ist.

2. Verfahren nach Anspruch 1, **dadurch gekennzeichnet, dass** die Luftkamera (30) ein Kameragehäuse und eine mit dem Kameragehäuse verbundene Videokamera umfasst, wobei die Tiefenkamera an dem Kameragehäuse angebracht ist; und das Bestimmen einer Zielentfernung zwischen der Luftkamera (30) und dem zu fotografierenden Objekt in Abhängigkeit von der tatsächlichen Entfernung Folgendes umfasst:
Feststellen, dass die tatsächliche Entfernung die Zielentfernung zwischen der Luftkamera (30) und dem zu fotografierenden Objekt ist.

3. Verfahren nach Anspruch 1, **dadurch gekennzeichnet, dass** ein Gyroskop in der Luftkamera (30) angeordnet ist und das Erfassen der Lageinformationen der Luftkamera (30) Folgendes umfasst:
Erfassen der Lageinformationen der Luftkamera (30) unter Verwendung des Gyroskops.

4. Verfahren nach Anspruch 1 oder 3, **dadurch gekennzeichnet, dass** die mehreren Tiefenkameras eine nach vorne gerichtete Tiefenkamera, die an einem vorderen Abschnitt des Rumpfs des UAV (10) angeordnet ist, eine nach hinten gerichtete Tiefenkamera, die an einem hinteren Abschnitt des Rumpfs angeordnet ist, eine nach links gerichtete Tiefenkamera, die an einem linken Abschnitt des Rumpfes angeordnet ist, eine nach rechts gerichtete Tiefenkamera, die an einem rechten Abschnitt des Rumpfes angeordnet ist, und eine nach unten gerichtete Tiefenkamera, die an einem unteren Abschnitt des Rumpfes angeordnet ist, umfassen; und wobei das Auswählen einer Tiefenkamera mit derselben Aufnahmerichtung wie die Luftkamera (30) als Ziel-Tiefenkamera aus den mehreren Tiefenkameras in Abhängigkeit von den Lageinformationen insbesondere Folgendes umfasst:

Auswählen der nach vorne gerichteten Tiefenkamera als Ziel-Tiefenkamera, wenn der Neigungswinkel des Kardanrahmens (20) in einem Bereich von 0° bis 45° liegt und die erfasste Aufnahmerichtung der Luftkamera (30) eine Vorwärtsrichtung ist; oder
Auswählen der nach hinten gerichteten Tiefenkamera als Ziel-Tiefenkamera, wenn die erfasste Aufnahmerichtung der Luftkamera (30) eine Rückwärtsrichtung ist; oder
Auswählen der nach links gerichteten Tiefenkamera als Ziel-Tiefenkamera, wenn die erfasste Aufnahmerichtung der Luftkamera (30) eine Richtung nach links ist; oder
Auswählen der nach rechts gerichteten Tiefenkamera als Ziel-Tiefenkamera, wenn die erfasste Aufnahmerichtung der Luftkamera (30) eine Richtung nach rechts ist; oder
Auswählen der nach unten gerichteten Tiefenkamera als Ziel-Tiefenkamera, wenn der Neigungswinkel des Kardanrahmens (20) in einem Bereich von 45° bis 90° liegt.

5. Verfahren nach einem der Ansprüche 1 bis 4, **dadurch gekennzeichnet, dass** das Steuern der Luftkamera (30) in Abhängigkeit von der Zielentfernung, um eine Fokussierung durchzuführen, Folgendes umfasst:

Ermitteln einer Entsprechung zwischen einer Objektentfernung und einer Brennweite der Luftkamera (30);
Feststellen, ob die Zielentfernung kleiner oder gleich einem voreingestellten Entfernungsschwellenwert ist; und
wenn ja, Steuern der Luftkamera (30) in Abhängigkeit von der Zielentfernung und der Entsprechung zwischen der Objektentfernung und der Brennweite der Luftkamera (30), um die Fokussierung durchzuführen.

6. Luftkamera (30), die unter Verwendung eines Kardanrahmens (20) an einem UAV (10) angebracht ist, wobei das UAV (10) mehrere Tiefenkameras umfasst und die Luftkamera (30) Folgendes umfasst:

ein Kameragehäuse;
ein im Kameragehäuse angeordnetes Linsenmodul;
mindestens einen Prozessor; und
einen mit dem mindestens einen Prozessor verbundenen Speicher, **dadurch gekennzeichnet, dass**
in dem Speicher vom mindestens einen Prozessor ausführbare Befehle gespeichert sind, wobei die Befehle, wenn sie vom mindestens einen Prozessor ausgeführt werden, den mindestens einen Prozessor veranlassen, das Fokussierungsverfahren nach einem der Ansprüche 1 bis 5 durchzuführen.

7. Unbemanntes Luftfahrzeug (UAV) (10), umfassend:

einen Rumpf;

einen Arm, der mit dem Rumpf verbunden ist;

ein Energiegerät, das an dem Arm angeordnet und dazu konfiguriert ist, Energie für den Flug des UAV (10) zu liefern;

einen Kardanrahmen (20), der mit dem Rumpf verbunden ist;

eine Luftkamera (30), die unter Verwendung des Kardanrahmens (20) an dem UAV (10) angebracht ist; und

mehrere Tiefenkameras, die an einem Rumpf des UAV (10) angeordnet sind, mit der Luftkamera (30) in Kommunikationsverbindung stehen und dazu konfiguriert sind, eine tatsächliche Entfernung zwischen einem zu fotografierenden Objekt und der Tiefenkamera in mehreren Richtungen zu erfassen;

wobei die Luftkamera (30) Folgendes umfasst:

ein Kameragehäuse;

ein im Kameragehäuse angeordnetes Linsenmodul;

mindestens einen Prozessor; und

einen mit dem mindestens einen Prozessor verbundenen Speicher, **dadurch gekennzeichnet, dass**

in dem Speicher vom mindestens einen Prozessor ausführbare Befehle gespeichert sind, wobei die Befehle, wenn sie vom mindestens einen Prozessor ausgeführt werden, den mindestens einen Prozessor veranlassen, das Fokussierungsverfahren nach einem der Ansprüche 1 bis 5 durchzuführen.

**8.** UAV (10) nach Anspruch 7, **dadurch gekennzeichnet, dass**
die Tiefenkamera am Kameragehäuse angebracht ist.

**9.** UAV (10) nach Anspruch 7, **dadurch gekennzeichnet, dass**
in der Luftkamera (30) ein Gyroskop angeordnet ist, das dazu konfiguriert ist, Lageinformationen der Luftkamera (30) zu erfassen.

## Revendications

**1.** Procédé de mise au point, le procédé étant applicable à une caméra aérienne (30), et la caméra aérienne (30) étant portée sur un véhicule aérien sans pilote, UAV, (10) à l'aide d'un cardan (20), le UAV (10) comprenant une pluralité de caméras de profondeur disposées sur un fuselage du UAV (10) et configurées pour acquérir une distance réelle entre un objet à photographier et le UAV (10) dans une pluralité de directions, le procédé comprenant :

acquérir des informations d'attitude de la caméra aérienne (30), les informations d'attitude comprenant une direction de photographie de la caméra aérienne (30) et un angle d'inclinaison du cardan (20) ;

sélectionner, parmi la pluralité de caméras de profondeur en fonction des informations d'attitude, une caméra de profondeur ayant une direction de photographie identique à celle de la caméra aérienne (30) comme caméra de profondeur cible ;

acquérir une distance réelle entre un objet à photographier et la caméra de profondeur cible à l'aide de la caméra de profondeur cible ;

calculer une distance cible entre la caméra aérienne (30) et l'objet à photographier en fonction de la distance réelle et des informations d'attitude de la caméra aérienne (30) ; et

commander, en fonction de la distance cible, la caméra aérienne (30) à effectuer la mise au point, dans lequel le calcul de la distance cible entre la caméra aérienne (30) et l'objet à photographier en fonction de la distance réelle et des informations d'attitude comprend :

lorsque l'angle d'inclinaison du cardan (20) est compris dans une plage de 0° à 45°, calculer la distance cible sur la base de la formule suivante :

$$L = L1 \bullet Cos\alpha + L2;$$

lorsque l'angle d'inclinaison du cardan (20) est compris dans une plage de 45° à 90°, calculer la distance cible sur la base de la formule suivante :
L = L1•Cos(90°-$\alpha$) + L2, dans lequel
L1 est la distance réelle entre l'objet à photographier et la caméra de profondeur cible acquise à l'aide de la caméra de profondeur cible, a est l'angle d'inclinaison du cardan (20), et L2 est une distance entre la caméra aérienne (30) et la caméra de profondeur cible dans la direction de photographie de la caméra aérienne (30).

**2.** Procédé selon la revendication 1, **caractérisé en ce que** la caméra aérienne (30) comprend un boîtier de caméra et une caméra vidéo connectée au boîtier de caméra, et la caméra de profondeur est montée au boîtier de caméra ; et
la détermination d'une distance cible entre la caméra aérienne (30) et l'objet à photographier en fonction de la distance réelle comprend :
déterminer que la distance réelle est la distance cible entre la caméra aérienne (30) et l'objet à photographier.

**3.** Procédé selon la revendication 1, **caractérisée en ce qu'**un gyroscope est disposé dans la caméra aérienne (30), et l'acquisition des informations d'attitude de la caméra aérienne (30) comprend :

acquérir les informations d'attitude de la caméra aérienne (30) à l'aide du gyroscope.

**4.** Procédé selon la revendication 1 ou 3, **caractérisé en ce que** la pluralité de caméras de profondeur comprennent une caméra de profondeur orientée vers l'avant disposée sur une partie avant du fuselage de l'UAV (10), une caméra de profondeur orientée vers l'arrière disposée sur une partie arrière du fuselage, une caméra de profondeur orientée vers la gauche disposée sur une partie gauche du fuselage, une caméra de profondeur orientée vers la droite disposée sur une partie droite du fuselage et une caméra de profondeur orientée vers le bas disposée sur une partie inférieure du fuselage ; et

la sélection, parmi la pluralité de caméras de profondeur en fonction des informations d'attitude, d'une caméra de profondeur ayant une direction de photographie identique à celle de la caméra aérienne (30) comme caméra de profondeur cible comprend :

lorsque l'angle d'inclinaison du cardan (20) est compris dans une plage de 0° à 45°, et lorsque la direction de photographie acquise de la caméra aérienne (30) est une direction avant, sélectionner la caméra de profondeur orientée vers l'avant comme caméra de profondeur cible ; ou

lorsque la direction de photographie acquise de la caméra aérienne (30) est une direction arrière, sélectionner la caméra de profondeur orientée vers l'arrière comme caméra de profondeur cible ; ou

lorsque la direction de photographie acquise de la caméra aérienne (30) est une direction gauche, sélectionner la caméra de profondeur orientée vers la gauche comme caméra de profondeur cible ; ou

lorsque la direction de photographie acquise de la caméra aérienne (30) est une direction droite, sélectionner la caméra de profondeur orientée vers la droite comme caméra de profondeur cible ; ou

lorsque l'angle d'inclinaison du cardan (20) est compris dans une plage de 45° à 90°, sélectionner la caméra de profondeur orientée vers le bas comme caméra de profondeur cible.

**5.** Procédé selon l'une quelconque des revendications 1 à 4, **caractérisé en ce que** la commande, en fonction de la distance cible, de la caméra aérienne (30) à effectuer la mise au point comprend :

acquérir une correspondance entre une distance d'objet et une distance focale de la caméra aérienne (30) ;

déterminer si la distance cible est inférieure ou égale à un seuil de distance prédéfinie ; et

si oui, commander, en fonction de la distance cible et de la correspondance entre la distance d'objet et la distance focale de la caméra aérienne (30), la caméra aérienne (30) à effectuer la mise au point.

**6.** Caméra aérienne (30), montée à un UAV, (10), à l'aide d'un cardan (20), le UAV (10) comprenant une pluralité de caméras de profondeur, la caméra aérienne (30) comprenant ;

un boîtier de caméra ;

un module de lentille, disposé dans le boîtier de caméra ;

au moins un processeur ; et

une mémoire, connectée à l'au moins un processeur, **caractérisée en ce que**

la mémoire stocke des instructions exécutables par l'au moins un processeur, et les instructions, lorsqu'elles sont exécutées par l'au moins un processeur, amène l'au moins un processeur à mette en œuvre le procédé de mise au point selon l'une quelconque des revendications 1 à 5.

**7.** Véhicule aérien sans pilote, UAV (10), comprenant :

un fuselage ;

un bras, connecté au fuselage ;

un appareil d'alimentation, disposé sur le bras et configuré pour alimenter le UAV (10) pour un vol ;

un cardan (20), connecté au fuselage ;

une caméra aérienne (30), montée au UAV, (10), à l'aide d'un cardan (20) ; et

une pluralité de caméras de profondeur disposées sur un fuselage du UAV (10), connectées par communication à la caméra aérienne (30) et configurées pour acquérir une distance réelle entre un objet à photographier et la caméra de profondeur dans une pluralité de directions ;

la caméra aérienne (30) comprenant :

un boîtier de caméra ;

un module de lentille, disposé dans le boîtier de caméra ;

au moins un processeur ; et

une mémoire, connectée à l'au moins un processeur, **caractérisée en ce que**

la mémoire stocke des instructions exécutables par l'au moins un processeur, et les instructions, lorsqu'elles sont exécutées par l'au moins un processeur, amène l'au moins un processeur à mette en œuvre le procédé de mise au point selon l'une quelconque des revendications 1 à 5.

8. UAV (10) selon la revendication 7, **caractérisé en ce que**
la caméra de profondeur est montée au boîtier de caméra.

9. UAV (10) selon la revendication 7, **caractérisé en ce que**
un gyroscope est disposé dans la caméra aérienne (30), et le gyroscope est configuré pour acquérir des informations d'attitude de la caméra aérienne (30).

FIG. 1

FIG. 2

Acquire an actual distance between a to-be-photographed object and a depth camera by using the depth camera — 210

Determine that the actual distance is a target distance between an aerial camera and the to-be-photographed object — 220

Acquire a correspondence between an object distance and a focal distance of the aerial camera, and determine whether the target distance is less than or equal to a preset distance threshold — 230

No

Yes

Control, according to the correspondence between the object distance and the focal distance correspondence of the aerial camera, the aerial camera to perform focusing — 240

FIG. 3

Acquire attitude information of the aerial camera, where the attitude information includes a photographing direction of the aerial camera and an angle of tilt of a gimbal — 310

Select, from the plurality of depth cameras according to the attitude information, a depth camera having a same photographing direction as the aerial camera as a target depth camera — 320

Acquire an actual distance between the to-be-photographed object and the target depth camera by using the target depth camera — 330

Calculate the target distance between the aerial camera and the to-be-photographed object according to the actual distance and the attitude information — 340

Acquire a correspondence between an object distance and a focal distance of the aerial camera, and determine whether the target distance is less than or equal to a preset distance threshold — 350

No

Yes

Control, according to the correspondence between the object distance and the focal distance of the aerial camera, the aerial camera to perform focusing — 360

FIG. 4

10

30°

210°

330°

20

FIG. 5

135°  45°

10

0°

20

225°  315°

## FIG. 6

| | |
|---|---|
| Actual distance acquisition module | 710 |
| Target distance determination module | 720 |
| Focusing module | 730 |

700

## FIG. 7

| | |
|---|---|
| Attitude information acquisition module | 810 |
| Binocular camera selection module | 820 |
| Actual distance acquisition module | 830 |
| Target distance determination module | 840 |
| Focusing module | 850 |

800

## FIG. 8

FIG. 9

**EP 3 972 235 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 208836252 U
- US 2019082113 A1
- US 2017374354 A1
- US 2018352167 A1
- CN 108924419 A
- CN 104796672 B